# EUROPEAN PATENT APPLICATION

(11) **EP 3 611 662 A1**
(43) Date of publication of application: **19.02.2020**
(21) Application number: 19189740.4
(22) Date of filing: 02.08.2019
(51) Int. Cl.: G06K 9/32

(54) **IMAGE PROCESSING APPARATUS AND IMAGE PROCESSING METHOD**

(30) Priority: 14.08.2018 JP 2018152686
(71) Applicant: Toshiba Tec Kabushiki Kaisha, 141-8562 Tokyo (JP)
(72) Inventor: YAMAZAKI, Keita, Shinagawa-ku, Tokyo 141-8562 (JP); YASUNAGA, Masaaki, Shinagawa-ku, Tokyo 141-8562 (JP)
(74) Representative: Bandpay & Greuter

(57) **Abstract**

An image processing apparatus includes a mobile body, a computer mounted on the mobile body, and a camera mounted on the mobile body. The computer is configured to carry out an image processing method which includes, with respect to each of images captured at different positions, determining an image recognition target region corresponding to a target object in a captured image, determining an image recognition hindrance region within the image recognition target region, and generating an image recognition result, and a likelihood of the image recognition result based on a size of the image recognition hindrance region relative to a size of the image recognition target region. Further, the image processing method includes generating an integrated image recognition result based on image recognition results and likelihoods of respective images.

## Description

### FIELD

Embodiments described herein relate generally to an image processing apparatus and an image processing method.

### BACKGROUND

As a method of recognizing a character string or an item within an image, there is a method of first extracting a region within the image that includes the character string or the item in the image and then recognizing the characters or item by type in the extracted region. Methods have been proposed for improving recognition accuracy that use a plurality of images of the same characters/items taken in sequence over time. However, even when such methods are used, misrecognition may still occur if various factors are present that inhibit recognition processing such as the presence of white void space or solid black regions in the image(s).

### SUMMARY OF INVENTION

To solve such problem, there is provided an image processing apparatus comprising: a mobile body, a computer mounted on the mobile body, and a camera mounted on the mobile body, wherein the computer is configured to: determine a first image recognition target region corresponding to a target object in a first image that has been captured by the camera at a first position; determine a first image recognition hindrance region within the first image recognition target region; generate a first image recognition result indicating one or more characters included in the first image recognition target region, and a first likelihood of the first image recognition result based on a size of the first image recognition hindrance region relative to a size of the first image recognition target region; determine a second image recognition target region corresponding to the target object in a second image that has been captured by a camera at a second position different from the first position; determine a second image recognition hindrance region within the second image recognition target region; generate a second image recognition result indicating one or more characters included in the second image recognition target region, and a second likelihood of the second image recognition result based on a size of the second image recognition hindrance region relative to a size of the second image recognition target region; and generate an integrated image recognition result indicating one or more characters on the target object based on the first and second image recognition results and the first and second likelihoods.

Preferably, the computer is configured to: determine a moving distance from the first position to the second position, wherein the second image recognition target region is determined based on a position of the first image recognition target region in the first image and the moving distance.

Preferably still, image pixels in the first image recognition target region having RGB values that satisfy a predetermined criteria determined as the first image recognition hindrance regions, and image pixels in the second image recognition target region having RGB values that satisfy the predetermined criteria determined as the second image recognition hindrance regions.

Preferably yet, the integrated image recognition result is generated based on the first image recognition result weighted by the first likelihood and the second image recognition result weighted by the second likelihood.

Suitably, when the second likelihood is greater than the first likelihood, the first image recognition result is generated as the integrated image recognition result, and when the second likelihood is greater than the first likelihood, the first image recognition result is generated as the integrated image recognition result.

Suitably still, the computer is configured to: determine a third image recognition target region corresponding to the target object in a third image that has been captured by a camera at a third position different from the first and second positions; determine a third image recognition hindrance region within the third image recognition target region; and generate a third image recognition result indicating one or more characters included in the third image recognition target region, and a third likelihood of the third image recognition result based on a size of the third image recognition hindrance region relative to a size of the third image recognition target region, wherein the integrated image recognition result is generated also based on the third image recognition result and the third likelihood.

Suitably yet, the integrated image recognition result is generated based on the first image recognition result weighted by the first likelihood, the second image recognition result weighted by the second likelihood, and the third image recognition result weighted by the third likelihood.

Typically, one of the first, second, and third image recognition results corresponding to a largest one of the first, second, and third likelihoods is generated as the integrated image recognition result.

Typically still, the first position is at a first angle with respect to the target object and the second position is at a second angle with respect to the target object, the second angle being different from the first angle.

Typically yet, the first image is captured by the camera when the camera on the mobile body is at the first position, and the second image is captured by the camera mounted on the mobile body when the camera on the mobile body is at the second position.

The invention also relates to an image processing method, comprising: determining a first image recognition target region corresponding to a target object in a first image that has been captured by a camera at a first position; determining a first image recognition hindrance region within the first image recognition target region; generating a first image recognition result indicating one or more characters included in the first image recognition target region, and a first likelihood of the first image recognition result based on a size of the first image recognition hindrance region relative to a size of the first image recognition target region; determining a second image recognition target region corresponding to the target object in a second image that has been captured by a camera at a second position different from the first position; determining a second image recognition hindrance region within the second image recognition target region; generating a second image recognition result indicating one or more characters included in the second image recognition target region, and a second likelihood of the second image recognition result based on a size of the second image recognition hindrance region relative to a size of the second image recognition target region; and generating an integrated image recognition result indicating one or more characters on the target object based on the first and second image recognition results and the first and second likelihoods.

Preferably, the image processing method further comprises: determining a moving distance from the first position to the second position, wherein the second image recognition target region is determined based on a position of the first image recognition target region in the first image and the moving distance.

Preferably still, image pixels in the first image recognition target region having RGB values that satisfy a predetermined criteria determined as the first image recognition hindrance regions, and image pixels in the second image recognition target region having RGB values that satisfy the predetermined criteria determined as the second image recognition hindrance regions.

Preferably yet, the integrated image recognition result is generated based on the first image recognition result weighted by the first likelihood and the second image recognition result weighted by the second likelihood.

Suitably, when the second likelihood is greater than the first likelihood, the first image recognition result is generated as the integrated image recognition result, and when the second likelihood is greater than the first likelihood, the first image recognition result is generated as the integrated image recognition result.

Suitably still, the image processing method further comprises: determining a third image recognition target region corresponding to the target object in a third image that has been captured by a camera at a third position different from the first and second positions; determining a third image recognition hindrance region within the third image recognition target region; and generating a third image recognition result indicating one or more characters included in the third image recognition target region, and a third likelihood of the third image recognition result based on a size of the third image recognition hindrance region relative to a size of the third image recognition target region, wherein the integrated image recognition result is generated also based on the third image recognition result and the third likelihood.

Suitably yet, the integrated image recognition result is generated based on the first image recognition result weighted by the first likelihood, the second image recognition result weighted by the second likelihood, and the third image recognition result weighted by the third likelihood.

Typically, one of the first, second, and third image recognition results corresponding to a largest one of the first, second, and third likelihoods is generated as the integrated image recognition result.

Typically still, the first position is at a first angle with respect to the target object and the second position is at a second angle with respect to the target object, the second angle being different from the first angle.

Typically yet, the first image is captured by a camera mounted on a mobile body when the camera on the mobile body is at the first position, and the second image is captured by the camera mounted on the mobile body when the camera on the mobile body is at the second position.

The invention also concerns a non-transitory computer readable medium storing a program causing a computer to execute the method described above.

### DESCRIPTION OF THE DRAWINGS

The above and other objects, features and advantages of the present invention will be made apparent from the following description of the preferred embodiments, given as non-limiting examples, with reference to the accompanying drawings, in which:
FIG. 1 is a diagram illustrating an overview of an image processing apparatus according to an embodiment.
FIG. 2 is a block diagram illustrating an example of a configuration of an image processing apparatus.
FIG. 3 is a flowchart of processing by a processor illustrated in FIG. 2.
FIG. 4 is a diagram depicting aspects of image recognition.
FIG. 5 is a diagram depicting aspects of image recognition.

### DETAILED DESCRIPTION

In general, according to an embodiment, an image processing apparatus includes a mobile body, a computer mounted on the mobile body, and a camera mounted on the mobile body. The computer is configured to carry out an image processing method. The image processing method comprises determining a first image recognition target region corresponding to a target object in a first image that has been captured by a camera at a first position, determining a first image recognition hindrance region within the first image recognition target region, generating a first image recognition result indicating one or more characters included in the first image recognition target region, and a first likelihood of the first image recognition result based on a size of the first image recognition hindrance region relative to a size of the first image recognition target region. The method further comprises determining a second image recognition target region corresponding to the target object in a second image that has been captured by a camera at a second position different from the first position, determining a second image recognition hindrance region within the second image recognition target region, and generating a second image recognition result indicating one or more characters included in the second image recognition target region, and a second likelihood of the second image recognition result based on a size of the second image recognition hindrance region relative to a size of the second image recognition target region. The method further comprises generating an integrated image recognition result indicating one or more characters on the target object based on the first and second image recognition results and the first and second likelihoods.

An image processing apparatus according to an example embodiment is described below with reference to the drawings. In the drawings, dimensional scales of sections may be varied as appropriate. In the drawings depiction of certain components and/or aspects may be simplified and illustrated in a manner to highlight certain distinctions for purposes of explanation.

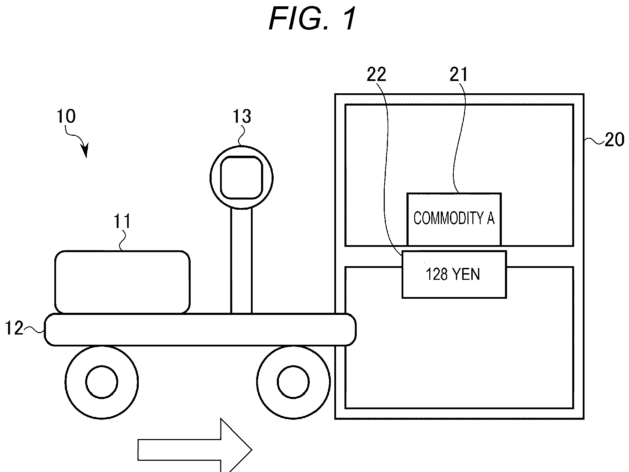

First, an image processing apparatus 10 is described with reference to FIG. 1. FIG. 1 is a diagram illustrating an overview of the image processing apparatus 10 according to an embodiment.
The image processing apparatus 10 is used for inventory management, location management, or the like of an article 21 placed on a shelf 20 or the like in a warehouse, a retail store, or the like. The image processing apparatus 10 identifies a type or category of the article 21 using image recognition. The image processing apparatus 10 identifies, with image recognition processing, a character string written on a label 22, which may be a price tag or a shelf (inventory) tag. In FIG. 1, a single shelf 20, a single article 21, and a single label 22 are illustrated. However, the numbers of shelves 20, articles 21, and labels 22 are not particularly limited.

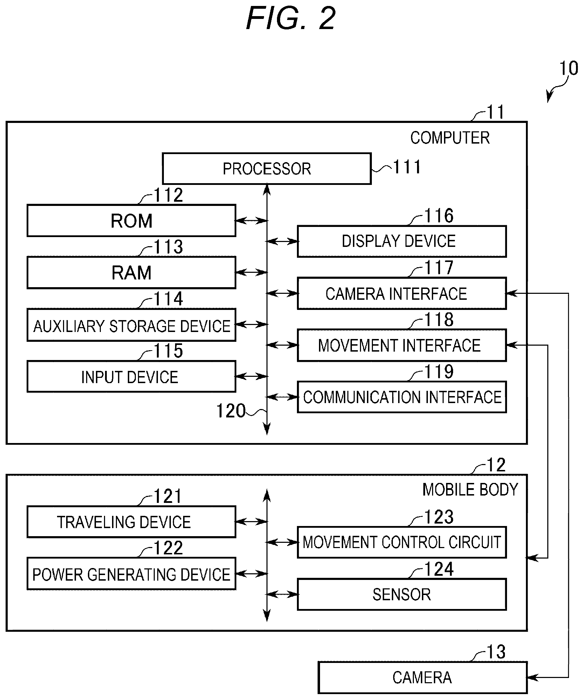

In this example, image processing apparatus 10 includes a computer 11, a mobile body 12, and a camera 13.
The computer 11 performs various kinds of processing such as arithmetic operations and control necessary for the operation of the image processing apparatus 10. The computer 11 is fixed to the mobile body 12.
The mobile body 12 is a vehicle or the like that is movable. The computer 11 and the camera 13 are placed on the mobile body 12. A block arrow illustrated in FIG. 1 indicates an example of a traveling direction of the mobile body 12. Here, the traveling direction is a direction generally parallel to the front surface of the shelf 20. The camera 13 photographs a target such as the article 21 or the character string on a label 22. The camera 13 may image the target as a still image (acquire single photographs) or as a moving image (acquire video images). The camera 13 is provided on the mobile body 12.
The image processing apparatus 10 is described with reference to FIG. 2. FIG. 2 is a block diagram illustrating an example of a circuit configuration of the image processing apparatus 10 according to the embodiment.
As an example, the computer 11 includes a processor (a CPU (central processing unit)) 111, a ROM (read-only memory) 112, a RAM (random-access memory) 113, an auxiliary storage device 114, an input device 115, a display device 116, a camera interface 117, a movement interface 118, and a communication interface 119. These components are connected by a bus 120 or the like.
The processor 111 is a part of the computer 11 that performs processing such as arithmetic operations and control necessary for the operation of the computer 11. The processor 111 controls the components based on computer programs such as system software, application software, or firmware stored in the ROM 112, the auxiliary storage device 114, or the like in order to realize various described functions of the computer 11. A part or all of the computer programs may be incorporated in or implemented as a circuit of the processor 111. The processor 111 is, for example, a CPU, a MPU (micro processing unit), an SoC (system on a chip), a DSP (digital signal processor), a GPU (graphics processing unit), an ASIC (application specific integrated circuit), a PLD (programmable logic device), or an FPGA (field-programmable gate array). Alternatively, the processor 111 may be a combination of these devices.
The ROM 112 is equivalent to a main storage device of the computer 11 including the processor 111 as the central part. The ROM 112 is nonvolatile memory exclusively used for readout of data. The ROM 112 stores the computer programs described above. The ROM 112 stores data and various setting values used by the processor 111 in performing the various kinds of processing.
The RAM 113 is equivalent to the main storage device of the computer 11 including the processor 111 as the central part. The RAM 113 is memory used for reading and writing of data. The RAM 113 is used as a so-called work area or the like in which data temporarily used by the processor 111 in performing the various kinds of processing is stored.
The auxiliary storage device 114 is equivalent to an auxiliary storage device of the computer 11 including the processor 111 as the central part. The auxiliary storage device 114 is, for example, an EEPROM (electric erasable programmable read-only memory), an HDD (hard disk drive), an SSD (solid state drive), or an eMMC (embedded Multi Media Card). The auxiliary storage device 114 may store the computer programs described above. The auxiliary storage device 114 saves data used by the processor 111 in performing the various kinds of processing, data generated by the processing in the processor 111, various setting values, and the like.

The auxiliary storage device 114 stores information for region detection and a recognition dictionary. The information for region detection is data used for detection of a recognition target region described below. The recognition dictionary is dictionary data used for image recognition.
The computer programs stored in the ROM 112 or the auxiliary storage device 114 include computer programs for executing processing described below. As an example, the computer 11 is transferred to an administrator, end-user, or the like of the computer 11 in a state in which the computer programs are already stored in the ROM 112 or the auxiliary storage device 114. However, the computer 11 may be transferred to the administrator or the like in a state in which the computer programs are not yet stored in the ROM 112 or the auxiliary storage device 114. The computer 11 may be transferred to the administrator or the like in a state in which computer programs different from the computer programs have been stored in the ROM 112 or the auxiliary storage device 114. The computer programs for executing the processing described below may be separately transferred to the administrator or the like and then written in the ROM 112 or the auxiliary storage device 114 by operation of the administrator or a service person. The transfer can be performed by recording the computer programs in a removable storage medium such as a magnetic disk, a magneto-optical disk, an optical disk, or a semiconductor memory or downloading the computer programs via a network or the like.
The input device 115 receives input operations from an operator of the image processing apparatus 10. The input device 115 is, for example, a keyboard, a keypad, a touch pad, or a button.
The display device 116 displays a screen for supplying various kinds of information to the operator of the image processing apparatus 10. The display device 116 is a display such as a liquid crystal display or an organic EL (electro-luminescence) display. A touch panel can also be used as the input device 115 and the display device 116. That is, a display panel included in the touch panel can be used as the display device 116. A pointing device by a touch input included in the touch panel can be used as the input device 115.
The camera interface 117 is an interface for communicably connecting the camera 13 and the computer 11.
The movement interface 118 is an interface for communicably connecting the mobile body 12 and the computer 11.
The communication interface 119 is an interface for the image processing apparatus 10 to communicate via a network such as a LAN (local area network) or the Internet.
The bus 120 includes a control bus, an address bus, and a data bus and transmits signals exchanged by the sections of the computer 11.
As an example, the mobile body 12 includes a traveling device 121, a power (movement) generating device 122, a movement control circuit 123, and a sensor 124. The traveling device 121 includes wheels and a steering wheel. The traveling device 121 is powered by the power generating device 122 and causes the mobile body 12 to move.

The power generating device 122 supplies power for movements. The power generating device 122 is a motor, an engine, or the like.

The movement control circuit 123 controls the traveling device 121 and the power generating device 122 to control movement of the mobile body 12.

A moving method for the mobile body 12 is not limited to the movements by the traveling device 121. The mobile body 12 is not limited to a mobile body that moves on the ground. The mobile body 12 may be a mobile body that moves, for example, in the air, on the water, or under the water.
The sensor 124 is, for example, a sensor capable of measuring a movement amount, a rotation angle, and the like of the mobile body 12. The sensor 124 is, for example, a sensor that measures a rotation angle of the traveling device 121, a gyro sensor, an acceleration sensor, or a sensor obtained by combining a plurality of these sensors. Alternatively, the sensor 124 is a sensor or a device for estimating position information using a GNSS (global navigation satellite system) such as a GPS (Global Positioning System), an IMES (Indoor MEssaging System), a positioning system using an access point such as Wi-Fi, a positioning system using a beacon such as a BLE (Bluetooth® low energy), a positioning system using terrestrial magnetism, DR (dead reckoning), a positioning system obtained by combining a plurality of systems among these systems, or the like.

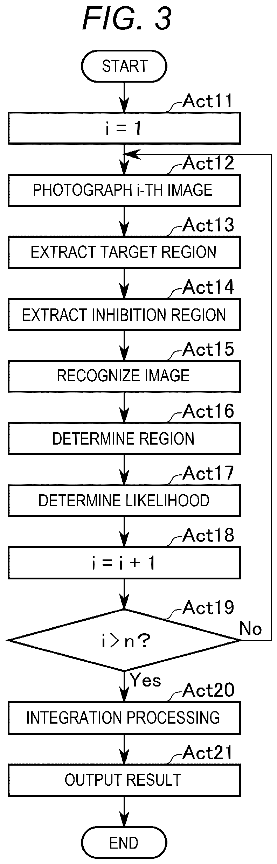

The image processing apparatus 10 may include a distance sensor or proximity sensor according to necessity.
The operation of the image processing apparatus 10 according to the embodiment is described below with reference to FIG. 3 and the like. The following operation example is merely one possible example of processing. Other kinds of processing which would be capable of obtaining the same result can be adopted as appropriate. FIG. 3 is a flowchart of processing carried out by the processor 111 of the computer 11. The processor 111 executes the processing based on a computer program stored in, for example, the ROM 112 or the auxiliary storage device 114. If the processor 111 proceeds to Act (N+1) after processing in Act N (where N is a natural number), description for explaining this may be omitted.
First, image recognition for a character string is described. The image recognition for characters may be called OCR (optical character recognition) as well.

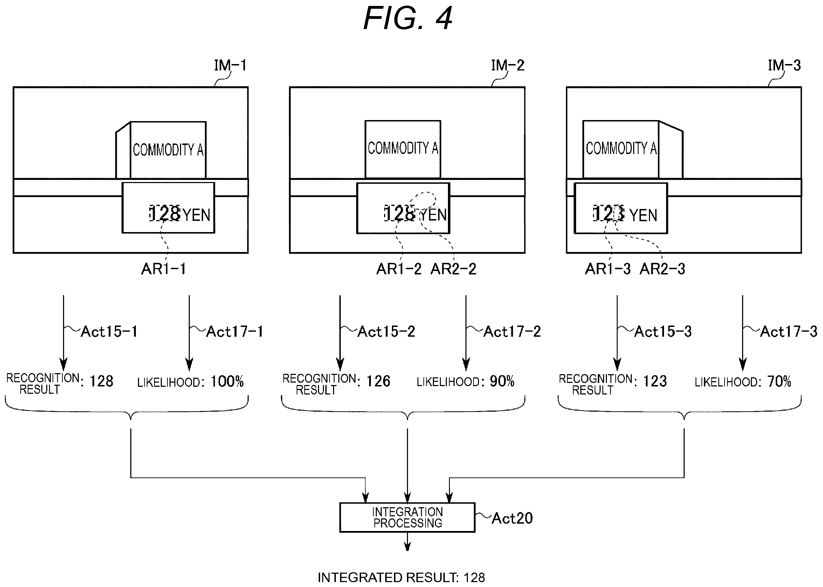

In Act 11, the processor 111 allocates a variable i to the RAM 113 and the like. The processor 111 sets a value of the variable i to 1.
In Act 12, the processor 111 instructs the camera 13 to photograph an i-th image IM. According to the instruction, the camera 13 photographs a target. The camera 13 outputs the photographed image IM. The output image IM is input to the computer 11 via the camera interface 117. While executing the processing illustrated in FIG. 3, the processor 111 controls the mobile body 12 to cause the mobile body 12 to travel. An example of the image IM is illustrated in FIG. 4. FIG. 4 is a diagram for explaining image recognition by the image processing apparatus 10 according to the embodiment. In FIG. 4, three images IM, that is, a first image IM-1, a second image IM-2, and a third image IM-3 are illustrated. Since the mobile body 12 is traveling, the image IM-1 to the image IM-3 are images obtained by photographing the article 21 and the label 22 at different angles. The i-th image photographed in Act 12 is hereinafter referred to as "image IM-i".
In Act 13, the processor 111 defines a recognition target region AR1 concerning the image IM-i. The recognition target region AR1 is a region including a recognition target. If the recognition target is a character string, the recognition target region AR1 is a region including a portion in which the character string is photographed. The processor 111 defines the recognition target region AR1 as, for example, a rectangular region. Preferably, the processor 111 defines the recognition target region AR1 as a smallest rectangle including the recognition target. In FIG. 4, as the recognition target region AR1, a recognition target region AR1-1 concerning the image IM-1, a recognition target region AR1-2 concerning the image IM-2, and a recognition target region AR1-3 concerning the image IM-3 are illustrated. In FIG. 4, all the recognition target regions AR1 include a character string "128". The processor 111 defines the recognition target region AR1 using a method such as (a1) or (a2) described below. However, the processor 111 may use other methods.
(a1) The processor 111 specifies, using information for region detection, the recognition target region AR1 with an image processing technique such as template matching.
(a2) The processor 111 specifies, using distance information or the like, the recognition target region AR1 from a portion in which a distance greatly changes.

If i is two or more, the processor 111 defines the recognition target region AR1 for the i-th image IM and the recognition target region AR1 for a (i-1)-th image IM as regions including the same recognition target. For defining the regions, the processor 111 uses a method such as (b1) or (b2) described below. However, the processor 111 may use other methods.
(b1) The processor 111 estimates, with homography estimation using a robust method such as RANSAC (random sample consensus), a portion where the same object is photographed in the (i-1)-th image IM and the i-th image IM.
(b2) The processor 111 acquires, from the sensor 124, a movement amount of the mobile body 12 from a point in time when the (i-1)-th image IM is photographed to a point in time when the i-th image IM is photographed. Consequently, the processor 111 calculates a movement amount indicating with which the recognition target region AR1 of the (i-1)-th image IM moves to in the i-th image IM. Consequently, the processor 111 defines the recognition target region AR1 for the i-th image IM as a region including the same recognition target as the recognition target region AR1 for the (i-1)-th image IM.

The processor 111 functions as a distance acquiring section that acquires, from the sensor 124, the movement amount of the mobile body 12 from the point in time when the (i-1)-th image IM is photographed to the point in time when the i-th image IM is photographed to acquire a distance from a point where a first image is photographed to a point where the second image is photographed.

The processor 111 functions as a defining section that performs the processing in Act 13 a plurality of times to define a recognition target region.
In Act 14, the processor 111 defines a recognition inhibition region AR2 concerning the image IM-i. The recognition hindrance region AR2 is a portion that inhibits image recognition in the image IM. Examples of a factor that causes the recognition hindrance region AR2 in an image include white void, black solid, ghost, flare, halation, scratches and stains of a lens, dust inside a camera, missing pixels of an image sensor, failure of the camera, and presence of an obstacle between the camera and a recognition target. In FIG. 4, as the recognition hindrance region AR2, a recognition hindrance region AR2-2 concerning the image IM-2 and a recognition hindrance region AR2-3 concerning the image IM-3 are illustrated. The recognition hindrance region AR2 does not occur concerning the image IM-1. The processor 111 defines the recognition hindrance region AR2 using a method such as (c1) or (c2) described below. However, the processor 111 may use other methods.
(c1) The processor 111 regards a portion where RGB (red, green, and blue)=(0, 0, 0) or RGB=(255, 255, 255) in the image IM-i as white void or black solid and recognizes the portion as the recognition hindrance region AR2. RGB=(0, 0, 0) indicates a color (black) having the highest concentration. RGB=(255, 255, 255) indicates a color (white) having the lowest concentration. This indicates numerical values obtained if the image IM-i is an 8-bit image. Different numerical values are obtained if the number of bits is different. Even if a color space other than RGB is used as a color space indicating a color in the image IM-i, a combination of numerical values indicating white and black is different.
(c2) Concerning the image IM-i, the processor 111 regards, as the recognition hindrance region AR2, a portion indicating a characteristic in which a distribution of a histogram is different from the other portions.
In Act 15, the processor 111 reads, concerning the image IM-i, a recognition target present within the recognition target region defined in Act 13. A result of the reading is referred to as "recognition result". Act 15-1 illustrated in FIG. 4 indicates the processing in Act 15 for the image IM-1. Act 15-2 illustrated in FIG. 4 indicates the processing in Act 15 for the image IM-2. Act 15-3 illustrated in FIG. 4 indicates the processing in Act 15 for the image IM-3. As an example, a recognition result concerning the image IM-1 is "128". An upper right part of the recognition target in the image IM-2 is chipped by the recognition hindrance region AR2-2. Consequently, as an example, a recognition result concerning the image IM-2 is "126". A left side of a third character of the recognition target in the image IM-3 is chipped by the recognition hindrance region AR2-3. Consequently, as an example, a recognition result concerning the image IM-3 is "123".
In Act 16, the processor 111 calculates, concerning the image IM-i, a ratio p of the recognition hindrance region AR2 in the recognition target region AR1. That is, the processor 111 can calculate the ratio p according to (an area of an overlapping portion of the recognition target region AR1 and the recognition hindrance region AR2)÷(an area of the recognition target region AR1).
In Act 17, the processor 111 calculates, concerning the image IM-i, a likelihood L of the recognition result in Act 15. The likelihood L is calculated by, for example, an expression L=(1-p) or L=((1-p)×100)%.
In Act 18, the processor 111 increases the value of the variable i by one.

In Act 19, the processor 111 determines whether or not the value of the variable i is larger than n, wherein n is a value indicating the total number of images to be photographed/obtained. If the value of the variable i is not larger than n, the processor 111 determines No in Act 17 and the process returns to Act 11. On the other hand, if the value of the variable i is larger than n, the processor 111 determines Yes in Act 17 and the process proceeds to Act 18. In this way, the processor 111 repeats Act 12 to Act 17 n time. Consequently, the image processing apparatus 10 photographs n images. Further, the image processing apparatus 10 performs the processing in Act 13 to Act 17 on each of the n images.

As described above, the processor 111 performs the processing in Act 12 a plurality of times to acquire a plurality of images. Therefore, the processor 111 functions as an acquiring section that performs the processing in Act 12 a plurality of times to acquire a first image and a second image in cooperation with the camera 13. For example, any two images among the image IM-1 to an image IM-n are the first image and the second image. The image recognition target region AR1 of the first image is an example of a first region. The recognition target region AR1 of the second image is an example of a second region. Further, the recognition hindrance region AR2 of the first image is an example of a third region. The recognition hindrance region AR2 of the second image is an example of a fourth region. Therefore, the processor 111 functions as a detecting section that performs the processing in Act 14 on the first image and the second image to detect the third region and the fourth region. The third region and the fourth region may be detected as in the image IM-1. The processor 111 functions as a determining section that performs the processing in Act 17 on the first image and the second image to determine a first likelihood and a second likelihood.
In Act 20, the processor 111 determines a final recognition result based on a plurality of recognition results obtained in Act 15 and a plurality of likelihoods calculated in Act 17. For example, concerning the respective recognition results of the image IM-1 to the image IM-n, the processor 111 performs weighted vote decision (e.g., plurality vote, majority vote) using the likelihoods. For example, if a recognition result of an image IM-k is X and a likelihood of the recognition result is 0.8, 0.8 vote is casted to the recognition result X: k is a natural number. In an example illustrated in FIG. 4, since a recognition result of the image IM-1 is "128" and a likelihood of the recognition result is 1 (=100%), one vote is casted to "128". Since a recognition result of the image IM-2 is "126" and a likelihood of the recognition result is 0.9 (=90%), 0.9 vote is casted to "126". Further, since a recognition result of the image IM-3 is "123" and a likelihood of the recognition result is 0.7 (=70%), 0.7 vote is casted to "123". Consequently, the number of obtained votes of "128" is one and is the largest. The processor 111 determines "128" having the largest number of obtained votes as a final recognition result. The processor 111 performs the vote decision in this way to determine a recognition result having the largest number of obtained votes as the final recognition result.

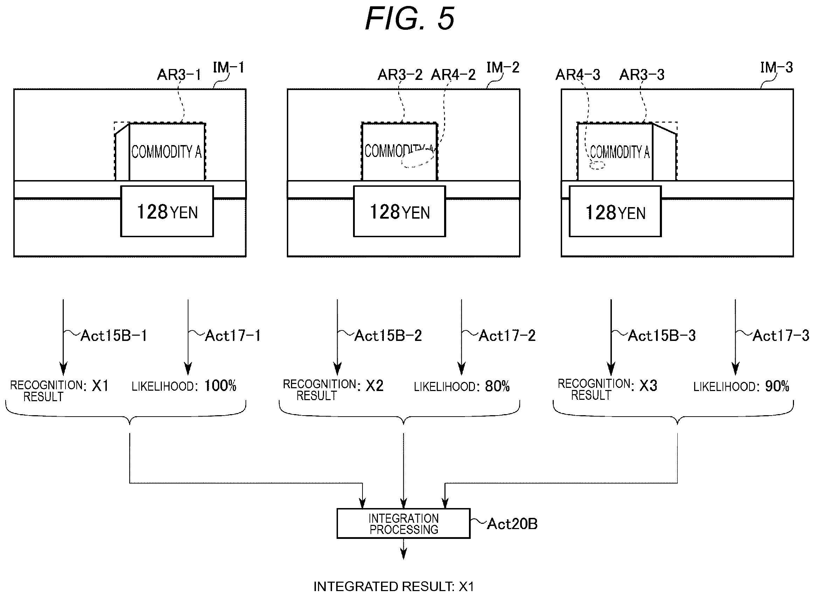

As described above, the processor 111 estimates an image recognition result based on recognition results and likelihoods of the plurality of images. Therefore, the processor 111 functions as a second estimating section that performs the processing in Act 20 to estimate an image recognition result of the recognition target based on the first image recognition result and the first likelihood and the second image recognition result and the second likelihood.
In Act 21, the processor 111 outputs the recognition result determined in Act 20. For example, the processor 111 controls the display device 116 to display the recognition result. The display device 116 displays the recognition result based on the control. For example, the processor 111 controls the communication interface 119 to transmit the recognition result. The communication interface 119 transmits the recognition result based on the control. After the processing in Act 21, the processor 111 ends the processing of the flowchart of FIG. 3.
Image recognition for specifying a type of an article is described with reference to FIGS. 3 and 5. FIG. 5 is a diagram for explaining image recognition carried out by the image processing apparatus 10 according to the embodiment. In the following explanation, processing different from the image recognition for a character string is described. Explanation is omitted concerning similarities. Concerning processing for specifying a type of an article with image recognition, B is attached to the end of a number of the processing in order to distinguish the processing. For example, Act 13 for specifying a type of an article with image processing is illustrated as Act 13B.
In Act 13B, the processor 111 defines a recognition target region AR3 concerning the image IM-i. The recognition target region AR3 is a region including a recognition target. If the recognition target is an article, the recognition target region AR3 is a region including a portion where the article is photographed. In FIG. 5, as the recognition target region AR3, a recognition target region AR3-1 concerning the image IM-1, a recognition target region AR3-2 concerning the image IM-2, and a recognition target region AR3-3 concerning the image IM-3 are illustrated. In FIG. 5, all the recognition target regions AR2 include portions where a commodity A is photographed. The processor 111 defines the recognition target region AR2 using, for example, the method such as (a1) or (a2) described above.
In Act 14B, the processor 111 defines a recognition hindrance region AR4 concerning the image IM-i. In FIG. 5, as the recognition hindrance region AR4, a recognition hindrance region AR4-2 concerning the image IM-2 and a recognition hindrance region AR4-3 concerning the image IM-3 are illustrated. The recognition hindrance region AR4 does not occur concerning the image IM-1.
In Act 15B, the processor 111 determines a type of the article with image recognition. For example, the processor 111 respectively calculates similarity degrees between the article in the recognition target region AR3 and types of articles included in the recognition dictionary and adopts the type of an article having the highest similarity degree as a recognition result. As illustrated in FIG. 5, as an example, a recognition result concerning the image IM-1 is "article X1". As an example, a recognition result for the image IM-2 is "article X2". A recognition result for the image IM-3 is "article X3". Here, the designations article X1, article X2, and the like may be a general name of an object such as "apple", "cabbage", or "milk" or may be a particular breed/varietal name, a product name, or the like such as "Fuji". In other instances, the designations article X1, article X2, and the like may be a name other than the generic item name, breed/varietal name, to product name so long as the designation name corresponds to a type of the article in some manner of interest.
In Act 16B, the processor 111 calculates, for the image IM-i, a ratio p of the recognition hindrance region AR4 in the recognition target region AR3. That is, the processor 111 can calculate the ratio p as (an area of an overlapping portion of the recognition target region AR3 and the recognition hindrance region AR4)÷(an area of the recognition target region AR3).
In Act 20B, the processor 111 determines a final recognition result based on a plurality of recognition results obtained in Act 15B and the plurality of likelihoods calculated in Act 17. For example, concerning the respective recognition results of the image IM-1 to the image IM-n, the processor 111 makes a weighted vote decision using the likelihoods. In an example illustrated in FIG. 5, since the recognition result of the image IM-1 is the "article X1" and a likelihood of the recognition result is 1 (=100%), one vote is casted to the "article X1". Since the recognition result of the image IM-2 is the "article X2" and a likelihood of the recognition result is 0.8 (=80%), 0.8 vote is casted to the "article X2". Further, since the recognition result of the image IM-3 is the "article X3" and a likelihood of the recognition result is 0.9 (=90%), 0.9 vote is casted to the "article X3". Consequently, the number of obtained votes of the "article X1" is one vote and is the largest. The processor 111 determines the "article X1" having the largest number of obtained vote as a final recognition result. The processor 111 performs the vote decision making in this way to set a recognition result having the largest number of votes as a final recognition result.

Alternatively, the processor 111 determines the final recognition result using the similarity degrees calculated in Act 15B in addition to the plurality of recognition results obtained in Act 15B and the plurality of likelihoods calculated in Act 17. For example, the processor 111 sets, as the number of votes, a number obtained by multiplying a likelihood by a similarity degree. For example, if the likelihood is 0.9 and the similarity degree is 0.8, the number of votes is considered to be 0.72 (=0.9×0.8).
As described above, the image processing apparatus 10 in the embodiment performs, using images continuously photographed a plurality of times by the moving camera 13, the image recognition for specifying a type and the like of a recognition target. At this time, if recognition hindrance regions are present in the images, the processor 111 reduces a likelihood of a recognition result in an image in which an area of the recognition hindrance region is larger. The processor 111 determines a final recognition result using recognition results for the plurality of images and likelihoods of the recognition results. Consequently, the image processing apparatus 10 can prevent an inaccurate recognition result from being adopted out of the recognition results for the plurality of images. Therefore, the occurrences of misrecognition are reduced and accuracy of the image recognition is improved. Even if a recognition hindrance region is absent in an image, since the image processing apparatus 10 performs the image recognition using a plurality of images, accuracy of the image recognition is still improved compared to if when only one image is used.
The image processing apparatus 10 in the embodiment uses a movement amount of the mobile body 12 to define recognition target regions in a plurality of images as regions including the same recognition target. Consequently, accuracy of the image processing apparatus 10 in the embodiment defining the recognition target regions is improved. If the accuracy of defining the recognition target regions is improved, accuracy of the image recognition is also generally improved.
The image processing apparatus 10 determines a final image recognition result with weighted vote decision using likelihoods as weights. Consequently, the image processing apparatus 10 can prevent a wrong recognition result from being adopted. Therefore, occurrence of misrecognition is reduced and accuracy of the image recognition is improved.
Modifications described below of the embodiment are also possible.

The character recognition may be performed on a one-character unit rather than a character string unit. That is, if the processor 111 reads "128" as in the embodiment, the processor 111 sets each of "1", "2", and "8" individually as a recognition target. That is, the processor 111 performs the same processing as Act 13 to Act 21 in the embodiment concerning each of "1", "2", and "8".
In the embodiment, the processor 111 determines the final recognition result with a vote decision. However, the processor 111 may determine the final recognition result with a method other than vote decision. For example, the processor 111 determines a recognition result having the highest likelihood as the final recognition result. However, if there are a plurality of recognition results having the same likelihood, the processor 111 performs the vote decision to determine the final recognition result from a subset of the recognition results.

By determining the recognition result having the highest likelihood as the final image recognition result, the processor 111 can prevent a wrong recognition result from being adopted. Therefore, occurrence of misrecognition is reduced and accuracy of the image recognition is improved.
In the example embodiment, the processor 111 performs control to photograph n images for the same recognition target. However, the processor 111 may perform the control of photographing without first determining or setting the number of images to be obtained. For example, the processor 111 performs the control to repeat photographing until the recognition target deviates from a frame of the image IM.
In the example embodiment, the processor 111 defines the recognition target region AR1 for the i-th image IM and the recognition target region AR1 for the (i-1)-th image IM as the regions including the same recognition target. Similarly, the processor 111 may define the recognition target region AR1 for the i-th image IM and the recognition target region AR1 for an (i-t)-th image IM as regions including the same recognition target, where t is a natural number smaller than i.
In the example embodiment, the image processing apparatus 10 photographs a plurality of images with one camera. However, the image processing apparatus 10 may include a plurality of cameras. The image processing apparatus 10 may photograph a plurality of images with the plurality of cameras.
In some examples, the computer 11 or portions thereof may be in a place separate from the mobile body 12. In this case, for example, an image photographed by the camera 13, sensor data measured by the mobile body 12, and the like may be transmitted to the computer 11 by wireless communication or the like.
The processor 111 may realize a part of the processing achieved by software programs in the example embodiment with dedicated or specialized hardware and/or circuitry.

While certain embodiments have been described, these embodiments have been presented by way of example only, and are not intended to limit the scope of the inventions. Indeed, the novel embodiments described herein may be embodied in a variety of other forms; furthermore, various omissions, substitutions and changes in the form of the embodiments described herein may be made without departing from the scope of the inventions. The accompanying claims and their equivalents are intended to cover such forms or modifications as would fall within the scope of the inventions.

## Claims

1. An image processing apparatus comprising:
a mobile body, a computer mounted on the mobile body, and a camera mounted on the mobile body, wherein the computer is configured to:
determine a first image recognition target region corresponding to a target object in a first image that has been captured by the camera at a first position;
determine a first image recognition hindrance region within the first image recognition target region;
generate a first image recognition result indicating one or more characters included in the first image recognition target region, and a first likelihood of the first image recognition result based on a size of the first image recognition hindrance region relative to a size of the first image recognition target region;
determine a second image recognition target region corresponding to the target object in a second image that has been captured by a camera at a second position different from the first position;
determine a second image recognition hindrance region within the second image recognition target region;
generate a second image recognition result indicating one or more characters included in the second image recognition target region, and a second likelihood of the second image recognition result based on a size of the second image recognition hindrance region relative to a size of the second image recognition target region; and
generate an integrated image recognition result indicating one or more characters on the target object based on the first and second image recognition results and the first and second likelihoods.

2. The image processing apparatus according to claim 1, wherein the computer is configured to:
determine a moving distance from the first position to the second position, wherein
the second image recognition target region is determined based on a position of the first image recognition target region in the first image and the moving distance.

3. The image processing apparatus according to claim 1 or 2, wherein
image pixels in the first image recognition target region having RGB values that satisfy a predetermined criteria determined as the first image recognition hindrance regions, and
image pixels in the second image recognition target region having RGB values that satisfy the predetermined criteria determined as the second image recognition hindrance regions.

4. The image processing apparatus according to any one of claims 1 to 3, wherein the integrated image recognition result is generated based on the first image recognition result weighted by the first likelihood and the second image recognition result weighted by the second likelihood.

5. The image processing apparatus according to claim 4, wherein
when the second likelihood is greater than the first likelihood, the first image recognition result is generated as the integrated image recognition result, and
when the second likelihood is greater than the first likelihood, the first image recognition result is generated as the integrated image recognition result.

6. The image processing apparatus according to any one of claims 1 to 5, wherein the computer is configured to:
determine a third image recognition target region corresponding to the target object in a third image that has been captured by a camera at a third position different from the first and second positions;
determine a third image recognition hindrance region within the third image recognition target region; and
generate a third image recognition result indicating one or more characters included in the third image recognition target region, and a third likelihood of the third image recognition result based on a size of the third image recognition hindrance region relative to a size of the third image recognition target region, wherein
the integrated image recognition result is generated also based on the third image recognition result and the third likelihood.

7. The image processing apparatus according to claim 6, wherein the integrated image recognition result is generated based on the first image recognition result weighted by the first likelihood, the second image recognition result weighted by the second likelihood, and the third image recognition result weighted by the third likelihood.

8. The image processing apparatus according to claim 7, wherein one of the first, second, and third image recognition results corresponding to a largest one of the first, second, and third likelihoods is generated as the integrated image recognition result.

9. The image processing apparatus according to any one of claims 1 to 8, wherein the first position is at a first angle with respect to the target object and the second position is at a second angle with respect to the target object, the second angle being different from the first angle.

10. The image processing apparatus according to any one of claims 1 to 9, wherein
the first image is captured by the camera when the camera on the mobile body is at the first position, and
the second image is captured by the camera mounted on the mobile body when the camera on the mobile body is at the second position.

11. An image processing method, comprising:
determining a first image recognition target region corresponding to a target object in a first image that has been captured by a camera at a first position;
determining a first image recognition hindrance region within the first image recognition target region;
generating a first image recognition result indicating one or more characters included in the first image recognition target region, and a first likelihood of the first image recognition result based on a size of the first image recognition hindrance region relative to a size of the first image recognition target region;
determining a second image recognition target region corresponding to the target object in a second image that has been captured by a camera at a second position different from the first position;
determining a second image recognition hindrance region within the second image recognition target region;
generating a second image recognition result indicating one or more characters included in the second image recognition target region, and a second likelihood of the second image recognition result based on a size of the second image recognition hindrance region relative to a size of the second image recognition target region; and
generating an integrated image recognition result indicating one or more characters on the target object based on the first and second image recognition results and the first and second likelihoods.

12. The image processing method according to claim 11, further comprising:
determining a moving distance from the first position to the second position, wherein
the second image recognition target region is determined based on a position of the first image recognition target region in the first image and the moving distance.

13. The image processing method according to claim 11 or 12, wherein
image pixels in the first image recognition target region having RGB values that satisfy a predetermined criteria determined as the first image recognition hindrance regions, and
image pixels in the second image recognition target region having RGB values that satisfy the predetermined criteria determined as the second image recognition hindrance regions.

14. The image processing method according to any one of claims 11 to 13, wherein the integrated image recognition result is generated based on the first image recognition result weighted by the first likelihood and the second image recognition result weighted by the second likelihood.

15. A non-transitory computer readable medium storing a program causing a computer to execute the method according to any one of claims 11 to 14.
